# EUROPÄISCHE PATENTSCHRIFT

(11) **EP 3 838 550 B1**
(45) Veröffentlichungstag und Bekanntmachung des Hinweises auf die Patenterteilung: **07.09.2022**
(21) Anmeldenummer: 20000471.1
(22) Anmeldetag: 16.12.2020
(51) Int. Cl.: B29C 49/02, B29C 49/06, B29C 49/28, B29C 49/12, B29C 49/42, B29L 31/00

(54) **SPRITZGUSSMASCHINE FÜR KONTINUIERLICHE PRODUKTION**
INJECTION MOULDING MACHINE FOR CONTINUOUS PRODUCTION
MACHINE DE MOULAGE PAR INJECTION POUR UNE FABRICATION CONTINUE

(30) Priorität: 17.12.2019 DE 102019134709
(43) Veröffentlichungstag der Anmeldung: 23.06.2021
(73) Patentinhaber: KRONES AG, 93073 Neutraubling (DE)
(72) Erfinder: Jochen, Hirdina, 93073 Neutraubling (DE)
(74) Vertreter: Hannke Bittner & Partner

(56) Entgegenhaltungen:
- EP-A2- 2 392 447
- DE-A1-102012 210 606
- DE-A1-102016 103 756
- US-A1- 2010 187 730

## Beschreibung

Die vorliegende Erfindung bezieht sich auf eine Vorrichtung und ein Verfahren zum Herstellen von Kunststoffvorformlingen. Aus dem Stand der Technik ist es bekannt, dass Kunststoffvorformlinge beispielsweise mittels einer Spritzgussmaschine hergestellt werden. Anschließend werden diese Kunststoffvorformlinge üblicherweise gelagert für den eigentlichen Herstellungsprozess von Kunststoffflaschen. Hierfür werden die erzeugten Kunststofffvorformlinge erwärmt und einer Umformungseinrichtung, wie beispielsweise einer Blasformmaschine zugeführt.

Derartige Vorrichtungen und Verfahren aus dem Stand der Technik sind in den Patentschriften US2010/187730A1, EP2392447A2 und DE102012210606A1 beschrieben.

Die Herstellung von Kunststoffvorformlingen (auch als Preforms bezeichnet), aus welchen dann in einem Verfahren, wie etwa einem Streckblasverfahren oder auch in einem Formfüllverfahren mit flüssigem Füllgut Behältnisse geformt werden, erfolgt heute ganz überwiegend in einem Spritzgusstaktverfahren. Das heißt es werden gleichzeitig mehrere Kunststoffvorformlinge (zum Beispiel 48 bis 196) spritzgegossen und dann in bestimmten zeitlichen Takten unabhängig von der Zykluszeit aus der Maschine gefördert.

Eine direkte Blockung eines Spritzgusstaktverfahrens mit einer Streckblasmaschine (nachfolgender Prozessschritt) ist aufgrund des kontinuierlichen Betriebs der Streckblasmaschine nur mit großen Einschränkungen möglich. Eine mögliche Lösung ist ein kontinuierliches Spritzgussverfahren, wie es künftig realisiert werden soll. Aber auch diese Technik weist einige Nachteile auf, da die Kunststoffschmelze auf ein rotatives System aufgebracht werden muss. Hier kann es zur Schädigung des Materials kommen und damit auch zu einer Beeinträchtigung der Qualität der so hergestellten Kunststoffvorformlinge.

Der vorliegenden Erfindung liegt daher die Aufgabe zugrunde, eine Vorrichtung und ein Verfahren zur Verfügung zu stellen, welche eine Anbindung einer oder mehrerer Spritzgussmaschinen an eine kontinuierlich arbeitende Maschine ermöglichen.

Eine erfindungsgemäße Vorrichtung zum Herstellen von Kunststoffvorformlingen weist wenigstens zwei Herstellungseinrichtungen auf, welche dazu geeignet und bestimmt sind, die Kunststoffvorformlinge aus einem Kunststoffmaterial herzustellen, wobei die Herstellungseinrichtungen jeweils Vorformlingstransporteinrichtungen aufweisen.

Erfindungsgemäß weist die Vorrichtung eine Haupttransporteinrichtung auf, welche dazu geeignet und bestimmt ist, die von den Herstellungseinrichtungen hergestellten und von den Vorformlingstransporteinrichtungen transportierten Kunststoffvorformlinge kontinuierlich entlang eines vorgegebenen Haupttransportpfads zu transportieren, wobei die Kunststoffvorformlinge nach der Herstellung durch die Herstellungseinrichtungen an die Haupttransporteinrichtung übergebbar sind.

Es wird daher vorgeschlagen, dass die Vorrichtung hier wenigstens zwei Herstellungseinrichtungen für Kunststoffvorformlinge aufweist, die bevorzugt getaktet arbeiten, jedoch die Kunststoffvorformlinge in einem Taktbetrieb an die kontinuierlich fördernde Haupttransporteinrichtungen übergeben.

Besonders bevorzugt weist die Haupttransporteinrichtung ein umlaufendes Transportmittel, wie insbesondere eine Transportkette auf, an der eine Vielzahl von Greifeinrichtungen zum Greifen der Kunststoffvorformlinge angeordnet sind. Neben einer umlaufenden Transporteinrichtung in der Transportkette kann auch eine umlaufende Transporteinrichtung in der Art eines Langstatorlinearmotors vorgesehen sein.

Bei einer bevorzugten Ausführungsform weist eine Vorformlingstransporteinrichtung einen drehbaren Träger auf, der zumindest die gefertigten Kunststoffvorformlinge transportieren kann. Die Erfindung bietet damit den Vorteil, dass die in Taktbetrieb beförderten Kunststoffvorformlinge gleichwohl mit einer kontinuierlich transportierenden Transporteinrichtung weiter gefördert werden können. Auf diese Weise können die Vorteile eines kontinuierlichen Systems genutzt werden.

Auch kann die durch den Herstellungsvorgang der Kunststoffvorformlinge erzeugte Wärme der Kunststoffvorformlinge auch zur Energieeinsparung genutzt werden, da eine nachfolgende Erwärmung der Kunststoffvorformlinge entweder nicht oder nur in geringerer Weise nötig ist. Es kann damit beispielsweise direkt an die Herstellung der Kunststoffvorformlinge eine Expansion der Kunststoffvorformlinge angeschlossen werden.

Bevorzugt handelt es sich bei wenigstens einer Herstellungseinrichtung zur Herstellung der Kunststoffvorformlinge um eine Injection-Compression-Moulding-Vorrichtung. Dabei können beispielsweise Herstellungskavitäten, in denen die Kunststoffvorformlinge hergestellt werden, stationär angeordnet sein und die so gefertigten Kunststoffvorformlinge können getaktet abtransportiert werden.

Dabei könnte die Vorrichtung insgesamt im Baukastenprinzip aufgebaut werden. So könnten kleine standardisierte Spritzgussmodule Kunststoffvorformlinge produzieren und diese an eine kontinuierlich laufende Haupttransporteinrichtung, beispielsweise eine kontinuierlich laufende Kette, abgeben.

Diese Haupttransporteinrichtung kann wiederum die Kunststoffvorformlinge (direkt oder indirekt) an eine Konditionierstation bzw. eine Heizeinrichtung zur Generierung eines Heizprofils, um eine bessere Materialverteilung beim Streckblasen zu gewährleisten, übergeben. Bei dieser Heizeinrichtung kann es sich beispielsweise um einen Infrarotofen handeln, es wäre jedoch auch die Verwendung eines Mikrowellenofens denkbar.

Bei einer bevorzugten Ausführungsform sind die Vorformlingstransporteinrichtungen dazu geeignet und bestimmt, die Kunststoffvorformlinge getaktet und/ oder schrittweise zu transportieren. Auch ist es denkbar, dass die Vorformlingstransporteinrichtungen dazu geeignet sind, die Kunststoffvorformlinge derart zu transportieren, dass die Kunststoffvorformlinge während eines Stillstands behandelt und/oder gefertigt werden.

Besonders bevorzugt weist wenigstens eine Herstellungseinrichtung wenigstens zwei Herstellungsstationen auf, welche dazu geeignet und bestimmt sind, die Kunststoffvorformlinge herzustellen. So kann beispielsweise jede Herstellungseinrichtung wenigstens 2, bevorzugt jedoch eine Vielzahl von Kavitäten aufweisen, in denen die Kunststoffvorformlinge hergestellt werden. Dabei ist es möglich, jede dieser Kavitäten als Station zu bezeichnen, es wäre jedoch auch möglich, dass eine Station mehrere Kavitäten aufweist.

Bei einer bevorzugten Ausführungsform sind die Herstellungseinrichtungen an einem Aussenumfang der Haupttransporteinrichtung angeordnet. Dabei können mehrere Herstellungseinrichtung nacheinander entlang eines Verlaufs der Haupttransporteinrichtung angeordnet sein.

Bei einer weiteren vorteilhaften Ausführungsform weist die Vorrichtung ein Reservoir für fließfähiges Kunststoffmaterial auf und wenigstens eine Zuführleitung, welche das Kunststoffmaterial von dem Reservoir zu den Herstellungseinrichtungen leitet. Dabei kann beispielsweise ein Hauptkanal vorgesehen sein, der auch bereits selbst das Reservoir darstellen kann und von dem zahlreiche Seitenkanäle abzweigen, wobei bevorzugt diese Seitenkanäle zu den einzelnen Herstellungseinrichtungen führen.

Bevorzugt ist dabei ein zentrales Reservoir für sämtliche Herstellungseinrichtungen vorgesehen. So kann beispielsweise eine Kunststoffschmelze zentral über einen Kanal zugeführt werden und es zweigen kleinere Kanäle zu den einzelnen Spritzgussmodulen bzw. Herstellungseinrichtungen ab. Durch eine Kombination, beispielsweise mit einem Compression Moulding kann es möglich sein, beispielsweise auf einen sogenannten Shooting Pot zu verzichten, wodurch das gesamte System deutlich kostengünstiger gestaltet werden kann.

Zusätzlich kann durch eine kurze Übergabestrecke zur Haupttransporteinrichtung bzw. Transportkette auch ein abgrenzbarer Bauraum (dieser ist nur durch die Heizkanalgröße bestimmt) erreicht werden.

Bei einer bevorzugten Ausführungsform eignet sich die hier beschriebene Vorgehensweise auch insbesondere für eine aseptische Produktion von Behältnissen, wie unten genauer beschrieben.

Die hier erwähnten Herstellungseinrichtungen für Kunststoffvorformling bzw. Spritzgussmodule können in Serienfertigung günstig hergestellt werden und die gewünschte Ausstoßleistung kann (passend zu einer nachfolgenden Streckblasmaschine) eine entsprechende Anzahl ausgelegt werden. Eine komplizierte Hot-Runner-Technologie ist nicht mehr nötig bzw. kann stark vereinfacht werden. Daneben kann auch eine Konzeptionierung bereits auf einen schnellen Formatwechsel ausgerichtet sein (es sind sehr viel weniger geringere Massen nötig) und daneben kann auch ein Lineexpresssystem mit aufgenommen werden.

Daneben könnte auch eine mögliche aseptische Ausführung große Vorteile bringen. Da die Kunststoffvorformlinge beim Spritzgießen (Schmelze bei 285 °C) steril sind und diese Sterilität durch aseptische Ausführung gehalten wird, könnte auf sämtliche Dekontaminationseinheiten, wie beispielsweise Sterilisationseinheiten und dergleichen verzichtet werden. Auch auf diese Weise können erhebliche Kosten eingespart werden.

Bei einer bevorzugten Ausführungsform weisen die Herstellungseinrichtungen jeweils wenigstens eine stationär angeordnete Herstellungsstation auf, welche dazu geeignet und bestimmt ist, die Kunststoffvorformlinge herzustellen. Bevorzugt weist wenigstens eine Herstellungseinrichtung und weisen bevorzugt mehrere Herstellungseinrichtungen eine Vielzahl von stationär angeordneten Herstellungsstationen auf, welche dazu geeignet und bestimmt sind, die Kunststoffvorformlinge herzustellen.

Die vorliegende Erfindung ist weiterhin auf eine Anlage zum Herstellen von Behältnissen mit einer Vorrichtung der oben beschriebenen Art gerichtet sowie einer in einer Transportrichtung der Kunststoffvorformlinge nach dieser Vorrichtung angeordneten Herstellungsvorrichtung zum Herstellen von Kunststoffbehältnissen, wobei diese weitere Herstellungsvorrichtung bevorzugt eine Vorrichtung zum Umformen von Kunststoffvorformlingen zu Kunststoffbehältnissen ist.

Besonders bevorzugt handelt es sich bei der nachgeordneten Maschine um eine Blasmaschine, welche erwärmte Kunststoffvorformlinge mittels Druckluft zu Kunststoffflaschen umformt. Daneben wäre es jedoch auch möglich, dass die erwärmten Kunststoffvorformlinge mittels eines flüssigen Produkts, insbesondere einer Flüssigkeit und insbesondere einer später abzufüllenden Flüssigkeit, expandiert werden.

Bei einer weiteren bevorzugten Ausführungsform weist diese Herstellungsvorrichtung eine weitere Erwärmungseinrichtung auf, welche die Kunststoffvorformlinge erwärmt. Grundsätzlich wäre es denkbar, dass die Kunststoffvorformling unmittelbar nach ihrer Herstellung in einen Formprozess, etwa einen Blasformprozess, übergeben werden. Allerdings kann es vorteilhaft sein, eine weitere Erwärmungseinrichtung dazwischen zu schalten, damit ein einheitliches Temperaturprofil der Kunststoffvorformlinge erreicht wird.

Bevorzugt schließt sich an die oben beschriebene Vorrichtung eine Erwärmungseinrichtung an. Dabei ist es möglich, dass auf ein Eintakten verzichtet wird, weil die Kunststoffvorformlinge bereits vereinzelt auf der Haupttransporteinrichtung gefördert werden. Auch kann gegebenenfalls auf einen Teilungsverzug, das heißt eine Änderung der Teilung zwischen den Kunststoffvorformlingen verzichtet werden.

Bei einer bevorzugten Ausführungsform ist die Herstellungsvorrichtung mit der hier beschriebenen Vorrichtung verblockt. Dies bedeutet, dass eine Synchronisierung zwischen der hier beschriebenen Vorrichtung und der nachgeordneten Herstellungsvorrichtung vorgenommen wird. Dabei können insbesondere Transportgeschwindigkeiten aufeinander angepasst werden und Änderungen von Geschwindigkeiten der einen Maschine durch die Verblockung auch eine Änderung von Transportgeschwindigkeiten einer weiteren Maschine nach sich ziehen.

Insbesondere ist die Haupttransporteinrichtung mit den nachfolgenden Transporteinrichtungen bzw. nachfolgenden Anlagenteilen verblockt und/ oder synchronisiert.

Bei einer weiteren bevorzugten Ausführungsform ist die Herstellungsvorrichtung eine steril umformende Vorrichtung zum Umformen von Kunststoffvorformlingen zu Kunststoffbehältnissen. Diese Herstellungseinrichtung bzw. Umformungseinrichtung weist bevorzugt eine Vielzahl von Umformungsstationen auf, innerhalb derer die Kunststoffvorformlinge zu den Kunststoffbehältnissen umgeformt werden. Diese Umformungsstationen können dabei jeweils Blasformen aufweisen, welche geöffnet werden können, um Kunststoffvorformlinge in diese einzugeben.

Bevorzugt weisen die Umformungsstationen auch Reckstangen auf, welche dazu dienen, in die Kunststoffvorformlinge eingeschoben zu werden, um diese in deren Längsrichtung zu dehnen.

Bevorzugt weisen die Umformungsstationen jeweils Blasformen auf, innerhalb derer die Kunststoffvorformlinge zu den Kunststoffbehältnissen umgeformt werden. Diese Blasformen können dabei geöffnet werden, um Kunststoffvorformlinge einzugeben. Daneben weisen die Umformungsstationen bevorzugt auch Beaufschlagungseinrichtungen auf, welche die Kunststoffvorformlinge mit einem fließförmigen und insbesondere gasförmigen Medium beaufschlagen, um die zu expandieren.

Bei einer weiteren bevorzugten Ausführungsform weist diese Umformungseinrichtung einen Reinraum auf, innerhalb dessen die Kunststoffvorformlinge transportiert werden. Dabei kann dieser Reinraum die Kunststoffvorformlinge bzw. deren Transportpfad beispielsweise kanalartig umgeben. Besonders bevorzugt ist dieser Reinraum gegenüber einer (unsterilen) Umgebung mittels zwei bezüglich einander beweglichen Wänden abgetrennt.

Wie ausgeführt, eignen sich sterile Maschinen insbesondere im vorliegenden Fall, da die unmittelbar gefertigten Kunststoffvorformlinge bereits selbst steril sind.

Die vorliegende Erfindung ist weiterhin auf ein Verfahren zum Herstellen von Kunststoffvorformlingen gerichtet, wobei wenigstens zwei Herstellungseinrichtungen die Kunststoffvorformlinge aus einem Kunststoffmaterial herstellen und wobei die Herstellungseinrichtungen jeweils Vorformlingstransporteinrichtungen aufweisen, welche die Kunststoffvorformlinge transportieren.

Erfindungsgemäß weist die Vorrichtung eine Haupttransporteinrichtung auf, welche die von den Herstellungseinrichtungen hergestellten und von den Vorformlingstransporteinrichtungen transportierten Kunststoffvorformlinge kontinuierlich entlang eines vorgegebenen Haupttransportpfads transportiert, wobei die Kunststoffvorformlinge nach deren Herstellung durch die Herstellungseinrichtungen an die Haupttransporteinrichtungen übergeben werden.

Es wird also auch verfahrensseitig vorgeschlagen, dass die von den Herstellungseinrichtungen gefertigten Kunststoffvorformlinge kontinuierlich durch die Haupttransporteinrichtung transportiert werden. Besonders bevorzugt transportieren die Vorformlingstransporteinrichtungen die Kunststoffvorformlinge getaktet und/ oder transportieren die Kunststoffvorformlinge derart, dass die Kunststoffvorformlinge während eines Stillstands der Voformlingstransporteinrichtungen hergestellt werden.

Besonders bevorzugt werden damit die Kunststoffvorformlinge von den Herstellungseinrichtungen an unterschiedlichen Positionen der Haupttransporteinrichtungen zugeführt. Dabei wäre es möglich, dass eine in der Transportrichtung der Kunststoffvorformlinge erste Herstellungseinrichtung eine bestimmte Anzahl von leeren Halte- bzw. Greifelementen besetzt, jedoch andere Halteelemente nicht besetzt und weitere Herstellungseinrichtungen dann weitere Leerstellen besetzen.

Besonders bevorzugt werden die Kunststoffvorformlinge anschließend zu einer Umformung transportiert. Weiterhin erfolgt bevorzugt eine Synchronisation der Haupttransporteinrichtung mit einer in der Transportrichtung der Kunststoffvorformlinge dieser nachgeordneten Transporteinrichtung.

Weitere Vorteile und Ausführungsformen ergeben sich aus den beigefügten Zeichnungen:
Darin zeigen:
- Fig. 1: Eine erfindungsgemäße Vorrichtung in einer schematischen Darstellung;
- Fig. 2: Eine Darstellung zur Veranschaulichung der Übergabe der Kunststoffvorformlinge an die Haupttransporteinrichtung;
- Fig. 3: Vier Darstellungen unterschiedlicher Maschinenkonfigurationen.

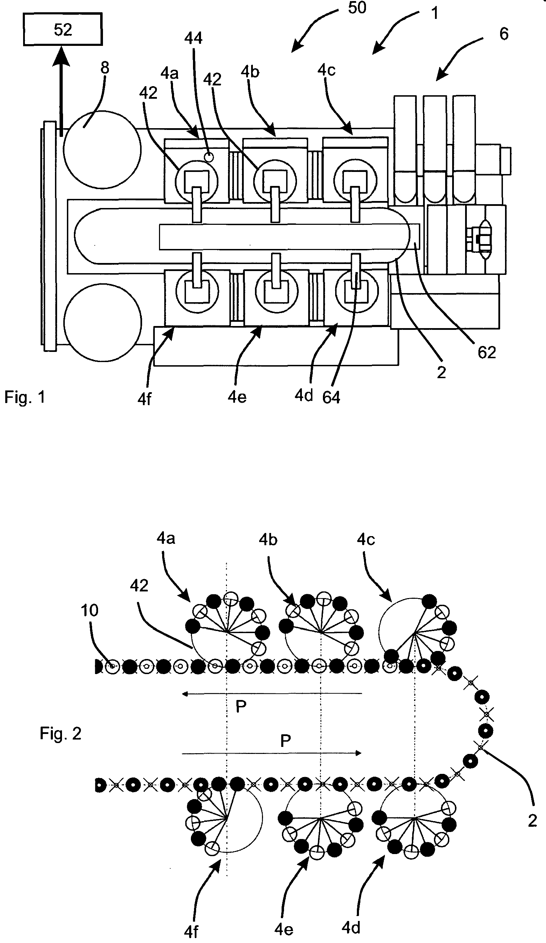

Figur 1 zeigt eine schematische Darstellung einer erfindungsgemäßen Vorrichtung 1 zum Herstellen von Kunststoffvorformlingen. Diese Vorrichtung weist eine Vielzahl, das heißt im vorliegenden Fall 6 Herstellungseinrichtungen 4a, 4b, 4c, 4d, 4e, 4f auf, welche jeweils Kunststoffvorformlinge herstellen.

Diese einzelnen Herstellungseinrichtungen weisen jeweils eine Vorformlingstransporteinrichtung 42 auf, welche hier als Trägerrad ausgeführt ist. Das Bezugszeichen 44 kennzeichnet (zur Vereinfachung ist nur eine dargestellt) Herstellungseinheiten für Kunststoffvorformlinge.

Die Vorformlingstransporteinrichtung 42 transportiert die in den Behandlungs- bzw. Herstellungseinheiten 44 hergestellten Kunststoffvorformlinge ab und übergibt sie an eine Haupttransporteinrichtung 2. Diese kann hier als Handlingskette ausgeführt sein, an der eine Vielzahl von Halteeinrichtungen (nicht gezeigt) zum Halten der Kunststoffvorformlinge angeordnet sind.

Das Bezugszeichen 6 kennzeichnet eine Extrusionseinheit bzw. ein Reservoir für eine Kunststoffschmelze. Diese wird über einen Hauptkanal 62 gefördert und mit einer Vielzahl von Nebenkanälen 64 den einzelnen Herstellungseinrichtungen zugeführt. Das Bezugszeichen P (Fig. 2) kennzeichnet den Transportpfad, entlang dessen die hergestellten Kunststoffvorformlinge transportiert werden.

Das Bezugszeichen 8 kennzeichnet einen Transportstern, der sich an die Haupttransporteinrichtung 2 anschließt. Wie oben erwähnt, transportiert die Haupttransporteinrichtung 2 die hergestellten Kunststoffvorformlinge kontinuierlich.

Das Bezugszeichen 50 kennzeichnet eine Anlage in ihrer Gesamtheit. Dabei schließt sich eine Transporteinrichtung 8 und eine weitere Vorrichtung, wie beispielsweise eine Streckblasmaschine 52, an.

Figur 2 veranschaulicht die Übergabe von Kunststoffvorformlingen an die Haupttransporteinrichtung 2. Dabei erkennt man hier, dass die Haupttransporteinrichtung 2 eine Vielzahl von Aufnahme- bzw. Halteeinrichtungen für die Kunststoffvorformlinge aufweist, und die einzelnen Herstellungseinrichtungen 4a bis 4f (allerdings in der umgekehrten Reihenfolge 4f bis 4a) jeweils die Kunststoffvorformlinge 10 an die Haupttransporteinrichtung 2 übergeben können. Dabei kann diese Übergabe derart gesteuert werden, dass die jeweiligen Vorformlingstransporteinrichtungen 42 der Herstellungseinrichtungen 4a bis 4f getaktet jeweils die gefertigten Kunststoffvorformlinge an die Haupttransporteinrichtung übergeben können.

Dabei ist es bevorzugt, dass in einem Bewegungszustand die Vorformlingstransporteinrichtungen auf eine Transportgeschwindigkeit der Haupttransporteinrichtung synchronisiert sind. Auf diese Weise ist eine reibungslose Übergabe der Kunststoffvorformlinge an die Haupttransporteinrichtung möglich.

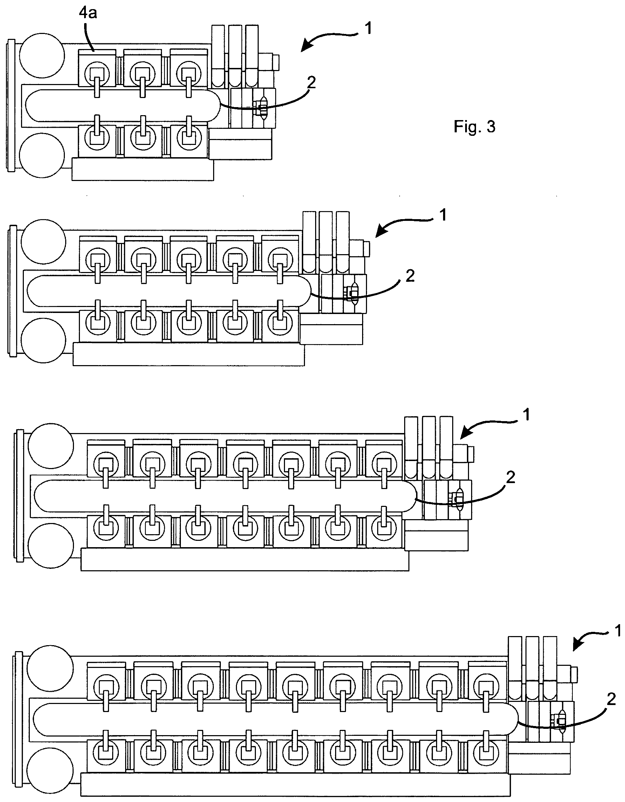

Figur 3 zeigt vier Darstellung unterschiedlicher Maschinengrößen. Diese Maschinengrößen unterscheiden sich insbesondere durch die Anzahl der jeweiligen Herstellungseinrichtungen 4a. Dabei können, wie in den Figuren gezeigt, beispielsweise 6, 10, 14 und 18 Herstellungseinrichtungen vorgesehen sein.

Besonders bevorzugt ist die Haupttransporteinrichtung 2 jeweils segmentiert aufgebaut und kann im Bedarfsfall verlängert oder verkürzt werden. Bei Vorsehen einer Transportkette kann dies dadurch erfolgen, dass ein Abstand zwischen den beiden Umlenkrädern verlängert wird und die Länge der Transportkette ebenfalls verlängert wird. Falls es sich bei der Haupttransporteinrichtung um eine Linearstatoreinheit handelt, können auch hier zusätzliche Segmente verwendet werden, um die Haupttransporteinrichtung zu verlängern.

Besonders bevorzugt ist also die Haupttransporteinrichtung wenigstens abschnittsweise segmentiert aufgebaut, sodass sie hinsichtlich einer Transportlänge veränderbar bzw. anpassbar ist.

### Bezugszeichenliste

- 1: Vorrichtung
- 2: Haupttransporteinrichtung
- 6: Extrusionseinheit
- 8: Transportstern
- 10: Kunststoffvorformlinge
- 42: Vorformlingstransporteinrichtung
- 44: Herstellungseinheiten
- 50: Anlage in ihrer Gesamtheit
- 64: Nebenkanäle
- 4a - 4f: Herstellungseinrichtungen
- P: Transportpfad

## Patentansprüche

1. Vorrichtung (1) zum Herstellen von Kunststoffvorformlingen (10), mit wenigstens zwei Herstellungseinrichtungen (4a, 4b), welche dazu geeignet und bestimmt sind, die Kunststoffvorformlinge (10) aus einem Kunststoffmaterial herzustellen, wobei die Herstellungseinrichtungen (4a, 4b) jeweils Vorformlingstransporteinrichtungen (42) aufweisen
**dadurch gekennzeichnet, dass**
die Vorrichtung eine Haupttransporteinrichtung (2) aufweist, welche dazu geeignet und bestimmt ist, die von den Herstellungseinrichtungen (4a, 4b) hergestellten und von den Vorformlingstransporteinrichtungen (42) transportierten Kunststoffvorformlinge (10) kontinuierlich entlang eines vorgegebenen Haupttransportpfads (P) zu transportieren, wobei die Kunststoffvorformlinge (10) nach deren Herstellung durch die Herstellungseinrichtungen (4a, 4b) an die Haupttransporteinrichtung (2) übergebbar sind.

2. Vorrichtung (1) nach Anspruch 1,
**dadurch gekennzeichnet, dass**
die Vorformlingstransporteinrichtungen (42) dazu geeignet und bestimmt sind, die Kunststoffvorformlinge (10) getaktet zu transportieren und/oder dazu geeignet sind, die Kunststoffvorformlinge derart zu transportieren, dass die Kunststoffvorformlinge während eines Stillstands hergestellt werden.

3. Vorrichtung (1) nach wenigstens einem der vorangegangenen Ansprüche,
**dadurch gekennzeichnet, dass**
die Herstellungseinrichtung (4a, 4b) wenigstens zwei Herstellungsstationen (44) aufweist, welche dazu geeignet und bestimmt sind die Kunststoffvorformlinge herzustellen.

4. Vorrichtung (1) nach wenigstens einem der vorangegangenen Ansprüche,
**dadurch gekennzeichnet, dass**
die Vorrichtung (1) ein Reservoir für fließfähiges Kunststoffmaterial aufweist und wenigstens eine Zuführleitung, welche das Kunststoffmaterial von dem Reservoir zu den Herstellungseinrichtungen (4a, 4b) leitet.

5. Vorrichtung (1) nach wenigstens einem der vorangegangenen Ansprüche,
**dadurch gekennzeichnet, dass**
die Herstellungseinrichtungen (4a, 4b) jeweils wenigstens eine stationär angeordnete Herstellungsstation (44) aufweisen, welche dazu geeignet und bestimmt ist die Vorformlinge herzustellen.

6. Anlage (50) zum Herstellen von Behältnissen mit einer Vorrichtung (1) nach wenigstens einem der vorangegangenen Ansprüche und einer in einer Transportrichtung der Kunststoffvorformlinge (10) nach dieser Vorrichtung (1) angeordneten Herstellungsvorrichtung (52) zum Herstellen von Kunststoffbehältnissen, wobei diese weitere Herstellungsvorrichtung (50) bevorzugt eine Vorrichtung zum Umformen von Kunststoffvorformlingen zu Kunststoffbehältnissen ist.

7. Anlage (50) nach dem vorangegangenen Anspruch,
**dadurch gekennzeichnet, dass**
die Herstellungsvorrichtung (52) mit der Vorrichtung verblockt ist.

8. Anlage (50) nach wenigstens einem der vorangegangenen Ansprüche,
**dadurch gekennzeichnet, dass**
die Herstellungsvorrichtung (50) eine steril umformende Vorrichtung zum Umformen von Kunststoffvorformlingen zu Kunststoffbehältnissen ist.

9. Verfahren zum Herstellen von Kunststoffvorformlingen (10), wobei wenigstens zwei Herstellungseinrichtungen (4a, 4b), die Kunststoffvorformlinge (10) aus einem Kunststoffmaterial herstellen, wobei die Herstellungseinrichtungen (4a, 4b) jeweils Vorformlingstransporteinrichtungen (42) aufweisen, welche die Kunststoffvorformlinge (10) transportieren
**dadurch gekennzeichnet, dass**
die Vorrichtung eine Haupttransporteinrichtung (2) aufweist, welche die von den Herstellungseinrichtungen (4a, 4b) hergestellten und von den Vorformlingstransporteinrichtungen (42) transportierten Kunststoffvorformlinge (10) kontinuierlich entlang eines vorgegebenen Haupttransportpfads (P) transportiert, wobei die Kunststoffvorformlinge (10) nach deren Herstellung durch die Herstellungseinrichtungen (4a, 4b) an die Haupttransporteinrichtung (2) übergeben werden.

10. Verfahren nach dem vorangegangenen Anspruch,
**dadurch gekennzeichnet, dass**
die Vorformlingstransporteinrichtungen (42) die Kunststoffvorformlinge (10) getaktet transportieren und/oder die Kunststoffvorformlinge derart transportieren, dass die Kunststoffvorformlinge während eines Stillstands der Vorformlingstransporteinrichtungen hergestellt werden.

## Claims

1. Apparatus (1) for producing plastic material preforms (10), having at least two manufacturing devices (4a, 4b) which are suitable and intended for producing the plastic material preforms (10) from a plastic material, wherein the manufacturing devices (4a, 4b) each having preform transport devices (42),
**characterised in that**
the apparatus has a main transport device (2), which is suitable and intended for continuously transporting the plastic material preforms (10) produced by the manufacturing devices (4a, 4b) and conveyed by the preform transport devices (42) along a predetermined main transport path (P), wherein the plastic material preforms (10) being transferable to the main transport devices (2) by the manufacturing devices (4a, 4b) after their production.

2. Apparatus (1) according to claim 1,
**characterised in that**
the preform transport devices (42) are suitable and intended to transport the plastic material preforms (10) in a clocked manner and/or are suitable for transporting the plastic material preforms in such a way that the plastic material preforms are produced during a standstill.

3. Apparatus (1) according to at least one of the preceding claims, **characterised in that**
the manufacturing device (4a, 4b) comprises at least two manufacturing stations (44) which are suitable and intended for manufacturing the plastic preforms.

4. Apparatus (1) according to at least one of the preceding claims, **characterised in that**
the apparatus (1) comprises a reservoir for flowable plastic material and at least one supply line which conducts the plastic material from the reservoir to the manufacturing means (4a, 4b).

5. Apparatus (1) according to at least one of the preceding claims, **characterised in that**
the manufacturing devices (4a, 4b) each have at least one stationary manufacturing station (44) which is suitable and intended for producing the preforms.

6. Plant (50) for producing containers with an apparatus (1) according to at least one of the preceding claims and a manufacturing device (52) for producing plastic material containers arranged in a transport direction of the plastic material preforms (10) after this apparatus (1), wherein this further manufacturing device (50) preferably being a device for forming plastic material preforms into plastic material containers.

7. Plant (50) according to the previous claim,
**characterised in that**
the manufacturing device (52) is blocked with the device.

8. Plant (50) according to at least one of the preceding claims, **characterised in that**
the manufacturing device (50) is a sterile forming device for forming plastic material preforms into plastic material containers.

9. Method for producing plastic material preforms (10), wherein at least two manufacturing devices (4a, 4b) produce plastic material preforms (10) from a plastic material, wherein the manufacturing devices (4a, 4b) each have preform transport devices (42) which transport the plastic material preforms (10),
**characterised in that**
the apparatus has a main transport device (2), which continuously conveys the plastic material preforms (10) produced by the manufacturing devices (4a, 4b) and conveyed by the preform transport devices (42) along a predetermined main transport path (P), wherein the plastic material preforms (10) being transferred to the main transport device (2) by the manufacturing devices (4a, 4b) after their production.

10. Method according to the previous claim,
**characterised in that**
the preform transport devices (42) transport the plastic material preforms (10) in a clocked manner and/or transport the plastic material preforms in such a way that the plastic material preforms are produced during a standstill of the preform transport devices.

## Revendications

1. Dispositif (1) de fabrication de préformes en matière plastique (10), avec au moins deux systèmes de fabrication (4a, 4b), lesquels sont adaptés pour et se destinent à fabriquer les préformes en matière plastique (10) à partir d'un matériau en matière plastique, dans lequel les systèmes de fabrication (4a, 4b) présentent respectivement des systèmes de transport de préforme (42),
**caractérisé en ce que**
le dispositif présente un système de transport principal (2) qui est adapté pour et se destine à transporter les préformes en matière plastique (10) fabriquées par les systèmes de fabrication (4a, 4b) et transportées par les systèmes de transport de préforme (42) en continu le long d'un trajet de transport principal (P) spécifié, dans lequel les préformes en matière plastique (10) peuvent être transférées au système de transport principal (2) après leur fabrication par les systèmes de fabrication (4a, 4b).

2. Dispositif (1) selon la revendication 1,
**caractérisé en ce que**
les systèmes de transport de préforme (42) sont adaptés pour et se destinent à transporter de manière cadencée les préformes en matière plastique (10) et/ou sont adaptés pour transporter les préformes en matière plastique de telle manière que les préformes en matière plastique sont fabriquées pendant un arrêt.

3. Dispositif (1) selon au moins l'une quelconque des revendications précédentes,
**caractérisé en ce que**
le système de fabrication (4a, 4b) présente au moins deux postes de fabrication (44), qui sont adaptés pour et se destinent à fabriquer les préformes en matière plastique.

4. Dispositif (1) selon au moins l'une quelconque des revendications précédentes,
**caractérisé en ce que**
le dispositif (1) présente un réservoir pour du matériau en matière plastique pouvant s'écouler et au moins une conduite d'amenée, laquelle achemine le matériau en matière plastique depuis le réservoir vers les systèmes de fabrication (4a, 4b).

5. Dispositif (1) selon au moins l'une quelconque des revendications précédentes,
**caractérisé en ce que**
les systèmes de fabrication (4a, 4b) présentent respectivement au moins un poste de fabrication (44) disposé de manière stationnaire, lequel est adapté pour et se destine à fabriquer les préformes.

6. Installation (50) de fabrication de récipients avec un dispositif (1) selon au moins l'une quelconque des revendications précédentes et un dispositif de fabrication (52) disposé dans une direction de transport des préformes en matière plastique (10) après ledit dispositif (1) pour fabriquer des récipients en matière plastique, dans laquelle ledit autre dispositif de fabrication (50) est de manière préférée un dispositif de façonnage de préformes en matière plastique en des récipients en matière plastique.

7. Installation (50) selon la revendication précédente,
**caractérisée en ce que**
le dispositif de fabrication (52) est bloqué avec le dispositif.

8. Installation (50) selon au moins l'une quelconque des revendications précédentes,
**caractérisée en ce que**
le dispositif de fabrication (50) est un dispositif façonné de manière stérile pour façonner des préformes en matière plastique en des récipients en matière plastique.

9. Procédé de fabrication de préformes en matière plastique (10), dans lequel au moins deux systèmes de fabrication (4a, 4b) fabriquent les préformes en matière plastique (10) à partir d'un matériau en matière plastique, dans lequel les systèmes de fabrication (4a, 4b) présentent respectivement des systèmes de transport de préforme (42), lesquels transportent les préformes en matière plastique (10),
**caractérisé en ce que**
le dispositif présente un système de transport principal (2), lequel transporte les préformes en matière plastique (10) fabriquées par les systèmes de fabrication (4a, 4b) et transportées par les systèmes de transport de préforme (42) en continu le long d'un trajet de transport principal (P) spécifié, dans lequel les préformes en matière plastique (10) sont transférées au système de transport principal (2) après leur fabrication par les systèmes de fabrication (4a, 4b).

10. Procédé selon la revendication précédente,
**caractérisé en ce que**
les systèmes de transport de préforme (42) transportent de manière cadencée les préformes en matière plastique (10) et/ou transportent les préformes en matière plastique de telle manière que les préformes en matière plastique sont fabriquées pendant un arrêt des systèmes de transport de préforme.
